Europäisches Patentamt

(19) European Patent Office

Office européen des brevets

(11) Publication number : **0 378 868 B1**

# (12) EUROPEAN PATENT SPECIFICATION

(45) Date of publication of patent specification :
30.12.92 Bulletin 92/53

(51) Int. Cl.⁵ : **A01G 9/14,** A01G 9/24

(21) Application number : **89202701.2**

(22) Date of filing : **25.10.89**

(54) Greenhouse, topprofile and engage-profile therefor and method for constructing a greenhouse.

(30) Priority : **20.01.89 NL 8900147**

(43) Date of publication of application :
25.07.90 Bulletin 90/30

(45) Publication of the grant of the patent :
30.12.92 Bulletin 92/53

(84) Designated Contracting States :
BE DE FR GB NL

(56) References cited :
FR-A- 2 614 638
GB-A- 693 805

(73) Proprietor : **P.L.J. BOM BEHEER B.V.
Slachthuisstraat 7
NL-2671 CV Naaldwijk (NL)**

(72) Inventor : **Bom, Petrus Leonardus Josef
De Barch 7
NL-3155 BB Maasland (NL)**

(74) Representative : **Konings, Lucien Marie
Cornelis Joseph et al
OCTROOIBUREAU ARNOLD & SIEDSMA
Sweelinckplein 1
NL-2517 GK Den Haag (NL)**

## Description

The invention relates in the first place to a glasshouse comprising a roof ridge profile component, extending logitudinally of a roof portion of said glasshouse and at least one window pivotably connected to said roof ridge profile component from a closed position into an opened position for ventilation, which window comprises a glass plate which is frameless on at least two of its sides, wherein at least one gripping member of a window opening mechanism is attached to this glass plate.

Such a glasshouse is discussed in FR-A-2 614 638.

In the known glasshouse of the above mentioned sort the gripping member is fixed to the glass plate using bolts extending through the glass plate. The drilling of holes in a glass plate is an expensive operation. Moreover such a drilling operation and/or a bolt extending through a hole causes uneven stresses in the glass plate, which can lead to breakage of the glass plate.

The invention provides a glasshouse improved in this respect in that said at least one gripping member is attached to the glass plate without fixing means extending through the glass plate.

In a particular embodiment of fixation at least one gripping member arranged on the lower edge of the glass plate is coupled via at least one tensioned pull member to a hinge profile arranged on the upper edge of said glass plate.

In another embodiment of fixation at least one gripping member for pivotable connection of an opening mechanism is attached to a glass plate of a window by means of clamping means.

In again another embodiment of fixation at least one gripping member for pivotable connection of an opening mechanism is glued to a glass plate of a window.

With the known method the gripping member and the hinge profile are fixed to the glass plate during a manufacture operation in a factory. The transportation of the glass plate to the construction site must be carried out carefully with the necessary support means. In this respect the invention relates to and provides an improved method for building a glasshouse as specified in claims 1-8 which has the feature that a plurality of glass plates openable for ventilation are transported to the construction site without attached gripping members and that the hinge profile and the gripping member are connected to the glass plate on the construction site. In this case the flat glass plates can be transported to the construction site with little transportation volume and well supported.

GB-A-693 805 discloses a glass horticultural shelter which can be erected around growing plants. This shelter is constituted by simple wire iron and frameless glass plates. It does not comprise windows which can be opened and closed by means of a window opening mechanism.

The mentioned and other features of the invention will be elucidated in the description following hereinafter with reference to a drawing.

In the drawings in schematic form:

Fig. 1 and 8 each show a perspective top view of a glasshouse according to two different preferred embodiments according to the invention;

Fig. 2 shows on a larger scale a partial, broken, vertical section along line II-II from figure 1;

Fig. 3 shows a section along line III-III from figure 1 on a larger scale;

Fig. 4 shows a section corresponding with figure 2 through another embodiment variant;

Fig. 5 shows on a larger scale fraction V from figure 4 before fitting;

Fig. 6 shows a broken away perspective view of yet another preferred embodiment of a window according to the invention;

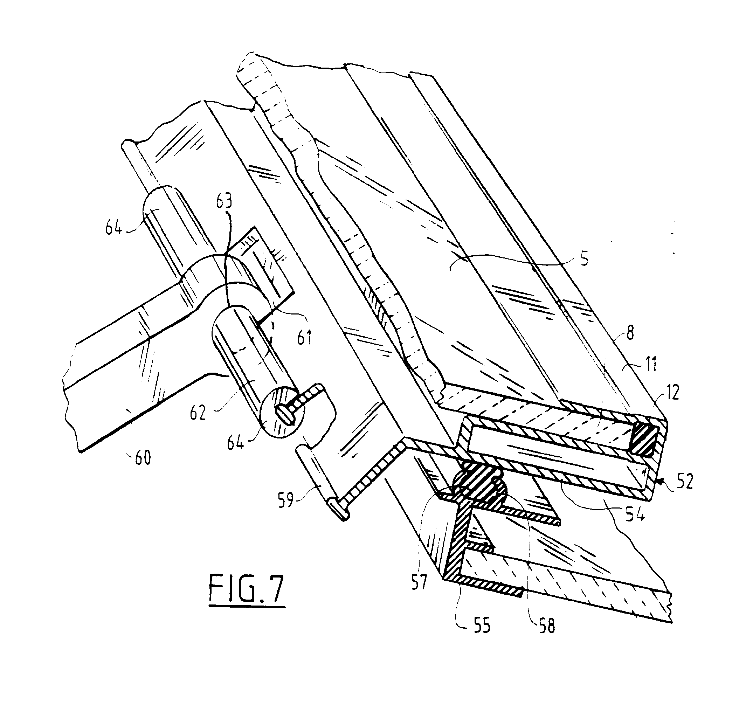

Fig. 7 is detail VII from figure 6 on a larger scale;

Fig. 9 shows on a larger scale a perspective section along line IX-IX from figure 8; and

Fig. 10 shows a section of detail X from figure 9 on a larger scale.

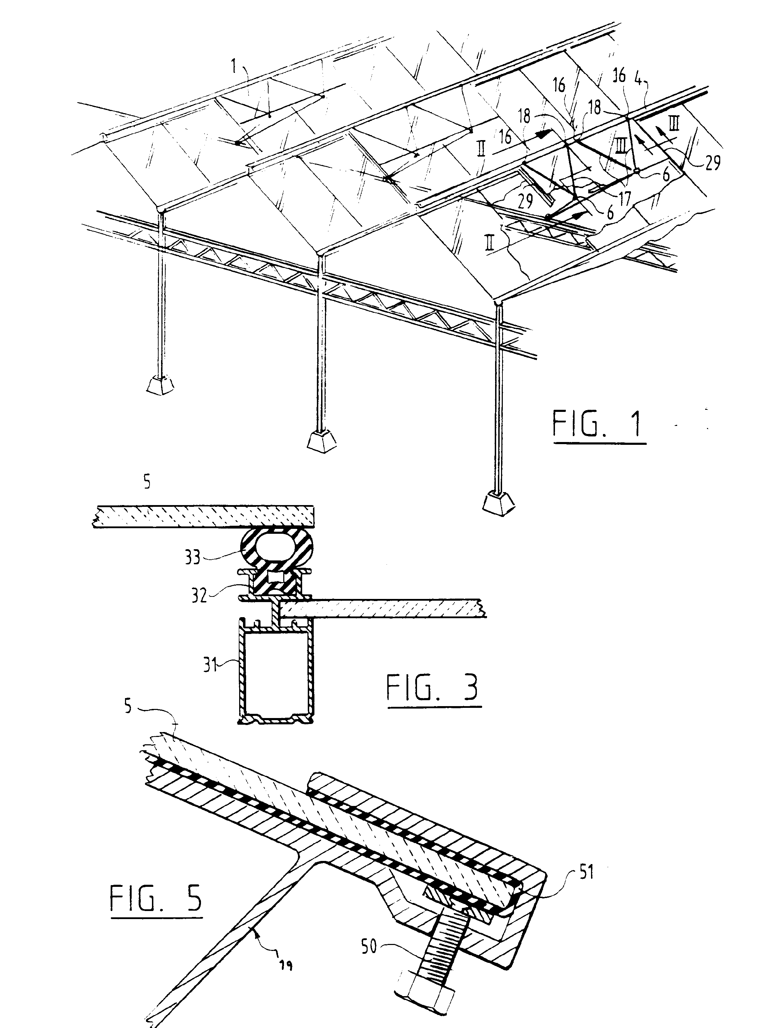

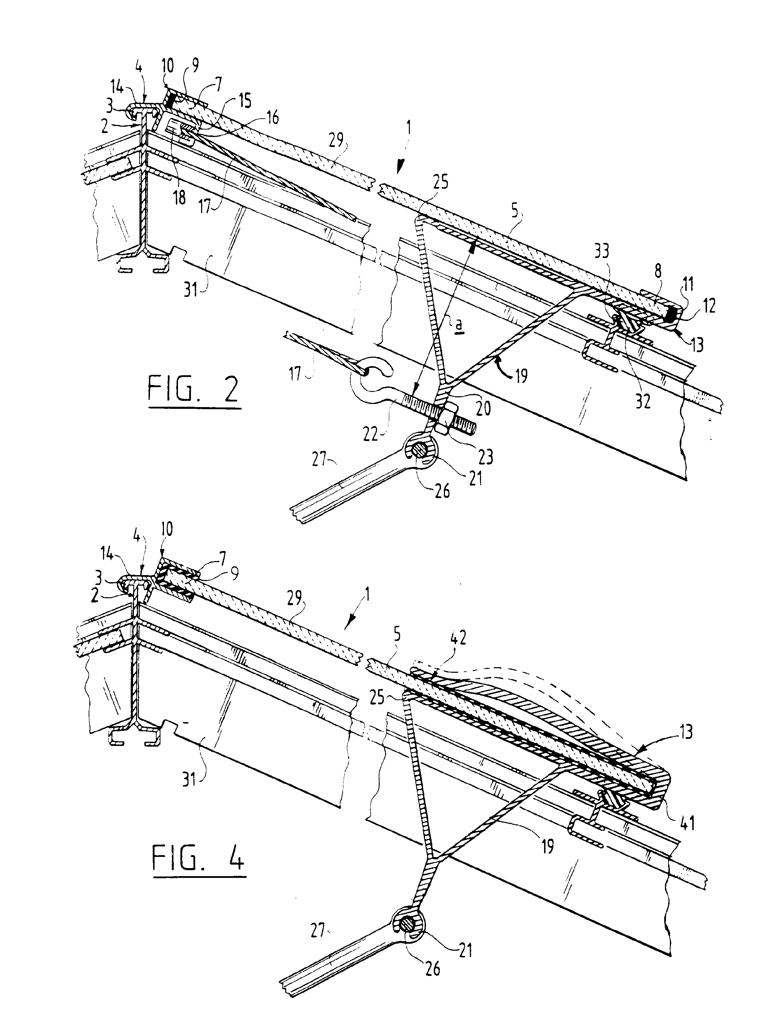

During the building of a glasshouse, windows 1 are arranged at regular intervals in the roof portions thereof. Each window 1 consists as in figures 1 and 2 preferably of a glass plate 5 which has on its upper edge 7 a hinge profile 4 and on its lower edge 8 two gripping members 13. Both side edges of the glass plate 5 are frameless.

Figure 2 shows a ridge profile 2 with a hinge edge 3, to which a window 1 is attached for swinging by means of its hinge profile 4.

A plurality of glass plates 5 intended for use as windows 1 openable for ventilation are transported to the construction site as a stack of plates lying flat on top of each other. The chance of glass breakage is thus slight, while the transport volume is small and the packaging material simple. The windows 1 are assembled on the construction site by a U-profile piece 10 of the hinge profile 4 being arranged around the upper edge 7 with interpositioning of an elastic strip 9. U-pieces 11 of two gripping members 13 are arranged around the lower edge 8 with interpositioning of elastic strips 12. The hinge profile 4 further comprises a hinge profile piece 14 with the form indicated in figure 2 in addition to an L-shaped attachment edge 15. This attachment edge 15 has slots 16 at the required locations for passage of a pull member 17, for instance a tensioning cable. A plug 18 fixed to the end of the pull member 17 is arranged behind the attachment edge 15.

Each gripping member 13 consists of a profile piece, which apart from the U-piece 11 has a triangular tube 19 at a short inward distance from said U-piece 11, a flange 20 and a coupling piece 21. Pushed through the flange 20 is a threaded hook 22 which grips onto the pull member 17 and which is tensioned by a nut 23 using a torque wrench so that the pulling cable 17 attains an adjusted tension. In this way the window 1 is firmly mounted without fixing means passing through the glass plate 5. The pull member 17 grips onto the hooks 22 at a distance a under the glass plate 5, whereby the glass plate 5 is biased under a bending moment. The glass plate thus always remains in contact with the edge 25 of the gripping member 13, also during upward wind suction force, which prevents breakage through gusts. The window opening mechanism 27 grips onto the coupling piece 21 by means of a coupling pin 26.

The window 1 is sealed watertight at the upper edge 7 by the hinge profile 4 running along it's whole length and at each side edge 29 because of a tubular elastic profile 33 that is arranged in a bar 31 extending between the ridge profile 2 and a gutter profile (fig. 3). Two bars 31 bear a window edge profile 32, in which is arranged a tubular elastic profile 33 which at the location of each gripping member 13 is either cut away or is so amply dimensioned that it can be pressed in somewhat more strongly at the location of each gripping member 13. In preference there are two pull members 17 tensioned in a V-form each having two plugs 18 present, as well as two gripping members 13. Other numbers are however conceivable.

In the variant of figure 4 each gripping member 13 has a broader U-shaped gripping profile piece 41 of slightly thicker material than in figure 1, which, with the inter positioning of a rubber U-shaped sealing strip 42 in the non-deformed state, is deformed from the open shape shown with dashed lines in figure 4 to the closed state drawn with full lines in figure 4 using a strong clamping tool. In this simple manner the gripping member 13 is firmly fixed to the glass plate 5. In preference an additional pressure force is exerted on the glass plate 5 above the edge 25 of the triangular tube 19 in order to hold the glass plate 5 continually in contact with the edge 25. The U-shaped profile piece 10, which in this case is thicker, is clamped by deformation around the upper edge 7, whereby a thick U-shaped rubber strip 9 is arranged around the upper edge 7.

According to figure 5 each gripping member 13 is connected to the glass plate 5, since this is clamped fixedly by a screw clamp 50 with the interpositioning of elastic material 51.

The gripping member may optionally be glued into place on the lower edge 8 with a U-shaped profile piece.

The glass plate can be manufactured of so-called hardened glass, which is slightly more elastic than normal glass, and can have a thickness of for instance 4, 5 or 6 mm. Common glass is preferably used, for instance with a thickness of about 5 mm or a thickness of about 4 mm. This applies to glass plate dimensions in the order of magnitude of 225 to 350 cm X 80 to 100 cm.

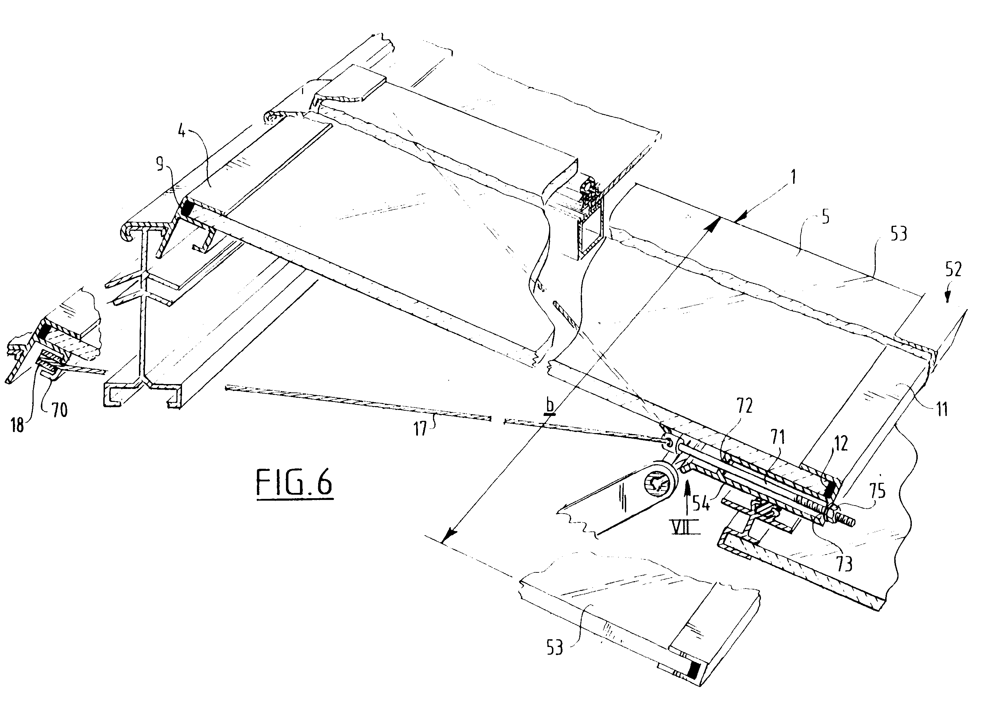

The glass house from figure 6 has a window 1 substantially consisting of a glass plate 5 of common glass with a thickness of 4 mm, a hinge profile 4 and a gripping profile 52. These two profiles 4 and 52 extend along the whole length b of one side of the glass plate 5, so that the four corners of the glass plate 5 are reinforced against break damage. The side edges 53 are not held in profiles or frames which would obstruct light. The two profiles 4 and 52 are mutually connected by a number of, for instance two, three or four pull members 17 which are arranged either perpendicular to the profiles 4 and 52, or in a slanting direction. As figure 6 shows, two plugs 18 per cable are arranged at slots 70, while the cable 17 is further placed through a draw bolt 71 which is placed through openings 72, 73 of the gripping profile 52 and is tensioned with a nut 75.

The gripping profile 52 of extruded aluminium has a U-piece 11 for receiving the lower edge 8 of the glass plate 5, a support piece 54 with which it supports on a spacer bar 55 via a sealing strip 57 arranged in a cavity 58 of the spacer bar 55, and a gripping edge 59 lying in the window opening. At the location of two opening rods 60 of the opening mechanism a cut-away portion 61 is arranged in the gripping edge 59. Here a hinge sleeve 62 is placed through a hinge eye 63 of the opening rod 60 and pushed over the gripping edge 59 as a bridge, while the ends 64 thereof are fixedly clamped around the gripping edge 59.

The glass plate edges 7 and 8 may or may not support against a rubber strip 9, 12.

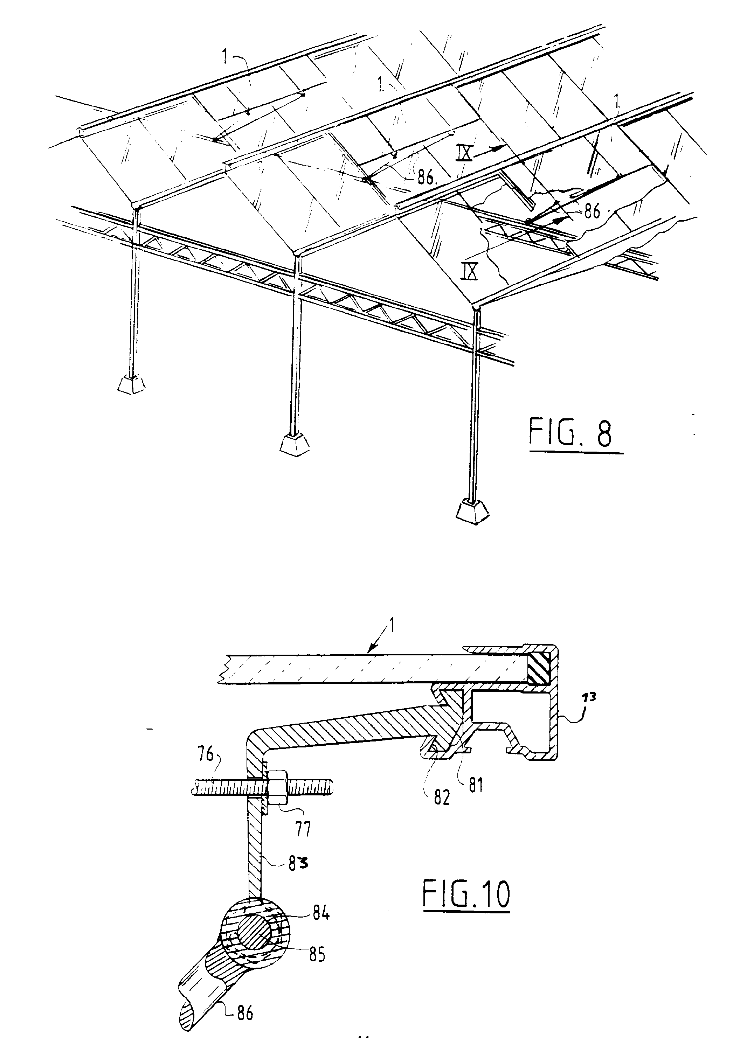

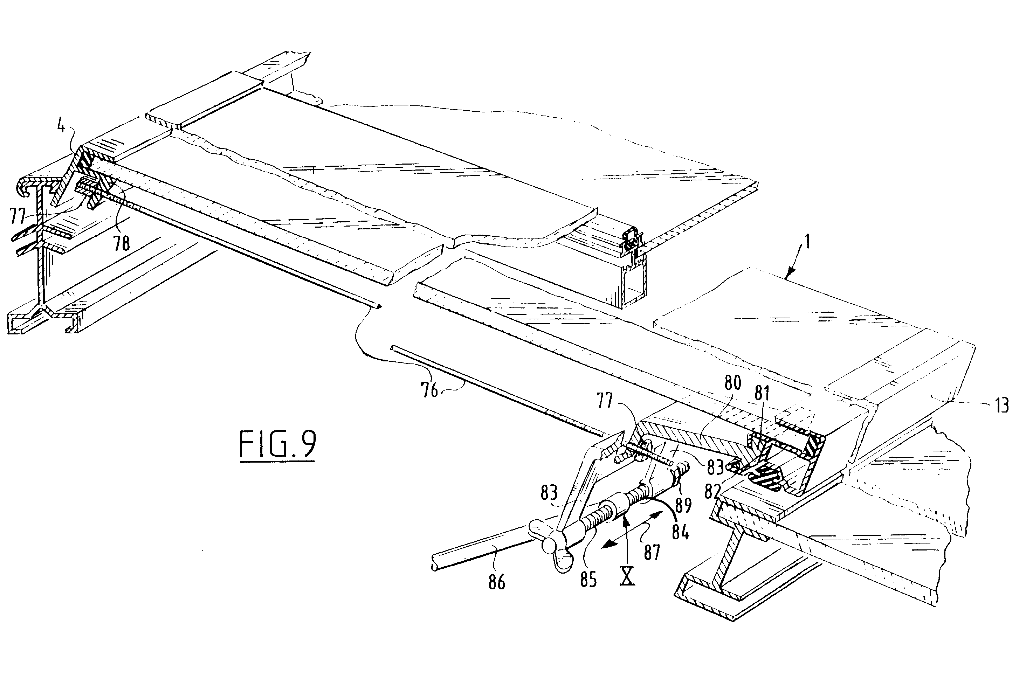

The window 1 of the glasshouse from figures 8-10 comprises a hinge profile 4 and a gripping member 13 formed as a profile which extend along the whole length of the window 1, which are mutually connected and pulled toward one another by only two threaded rods 76 with screw thread and nuts 77. The threaded rods 76 grip onto a flange 78 of the hinge profile 4 and onto an anchor element 80, which grips with an anchor piece 81 into an anchoring cavity 82 of the gripping member 13 and which has prongs 83 with a bolt channel 84 for receiving a winged bolt 85. An opening rod 86 grips with a screw thread onto the winged bolt 85, so that through turning of the winged bolt 85 the opening rod 86 can be adjusted in the arrow directions 87 in order to adjust the angle of the slightly opened window 1, so that all windows 1 are open the same distance. After adjustment the winged bolt 85 can be fixed in position with a nut 89.

## Claims

1. Glasshouse comprising a roof ridge profile component (2) extending longitudinally of a roof portion of the glasshouse, and at least one window (1) pivotably connected to said roof ridge profile component (2) from a closed position into an opened position for ventilation, which window (1) comprises a glass plate (5) which is frameless on at least two of its sides, wherein at least one gripping member (13) of a window opening mechanism (27) is attached to this glass plate (5), characterized in that said at least one gripping member (13) is attached to said glass plate (5) of said window (1) without fixing means extending through said glass plate (5).

2. Glasshouse as claimed in claim 1, characterized in that at least one gripping member (13) arranged on the lower edge (8) of the glass plate (5) of said window (1) is coupled via at least one tensioned pull member (17) to a hinge profile (4) arranged on the upper edge (7) of said glass plate (5).

3. Glasshouse as claimed in claim 1 or 2, characterized in that the hinge profile (4) is provided with an attachment edge (15) for at least one pull member (17).

4. Glasshouse as claimed in any of the foregoing claims, characterized in that the window (1) has on its lower edge (8) at least one profile piece which in addition to a U-shaped gripping piece (11) gripping onto the lower edge (8) of the glass plate (5) comprises a triangular tube (19) at a short inward distance from said U-shaped piece (11), a flange (20), and a coupling piece (21) coupled to an opening mechanism (27).

5. Glasshouse as claimed in claim 1, characterized in that at least one gripping member for pivotable connection of an opening mechanism (27) is attached to a glass plate (5) of a window (1) by means of clamping means (50).

6. Glasshouse as claimed in claim 1, characterized in that at least one gripping member for pivotable connection of an opening mechanism (27) is glued to a glass plate (5) of a window (1).

7. Glasshouse as claimed in any of the foregoing claims, characterized in that the window (1) comprises a glass plate (5) of common glass, which preferably has a thickness of 4 to 5 mm.

8. Glasshouse as claimed in any of the preceding claims, characterized in that the window (1) consists substantially of a glass plate (5) of common glass with hinge profile (4) and gripping profile (13) extending substantially along the whole length of the upper and lower edges of said glass plate (5).

9. Method for building a glasshouse as specified in any preceding claim, characterized in that a plurality of glass plates (5) for windows (1) openable for ventilation are transported to the construction site without attached hinge profile and without attached gripping member and that said hinge profile and said gripping profile are connected to the glass plate on the construction site.

**Patentansprüche**

1. Gewächshaus, das eine Firstprofilkomponente (2), welche sich längs eines Dachabschnitts des Gewächshauses erstreckt, und mindestens ein Fenster (1) umfaßt, welches zur Lüftung aus einer geschlossenen Stellung in eine geöffnete Stellung schwenkbar mit der Firstprofilkomponente (2) verbunden ist, wobei das Fenster (1) eine Glasplatte (5) umfaßt, die an mindestens zwei ihrer Seiten rahmenlos ist, wobei mindestens ein Greifelement (13) eines Fensteröffnungsmechanismus (27) an dieser Glasplatte (5) befestigt ist, dadurch gekennzeichnet, daß das mindestens eine Greifelement (13) an der Glasplatte (5) des Fensters (1) befestigt ist, ohne daß sich Befestigungsmittel durch die Glasplatte (5) erstrecken.

2. Gewächshaus nach Anspruch 1, dadurch gekennzeichnet, daß mindestens ein Greifelement (13), welches auf dem unteren Rand (8) der Glasplatte (5) des Fensters (1) angeordnet ist, mittels mindestens eines gespannten Zugelements (17) mit einem Scharnierprofil (4) verbunden ist, das auf dem oberen Rand (7) der Glasplatte (5) angeordnet ist.

3. Gewächshaus nach Anspruch 1 oder 2, dadurch gekennzeichnet, daß das Scharnierprofil (4) mit einem Befestigungsrand (15) für mindestens ein Zugelement (17) ausgestattet ist.

4. Gewächshaus nach einem der vorhergehenden Ansprüche, dadurch gekennzeichnet, daß das Fenster (1) an seinem unteren Rand (8) mindestens ein Profilteil aufweist, welches abgesehen von einem U-förmigen Greifteil (11), welches an den unteren Rand (8) der Glasplatte (5) greift, ein dreieckiges Rohr (19) in einem kurzen nach innen gerichteten Abstand von dem U-förmigen Teil (11), einen Flansch 20 und ein Kopplungsstück (21) umfaßt, welches an einen Öffnungsmechanismus (27) gekoppelt ist.

5. Gewächshaus nach Anspruch 1, dadurch gekennzeichnet, daß das mindestens eine Greifelement für die schwenkbare Verbindung mit einem Öffnungsmechanismus (27) mit einer Glasplatte (5) eines Fensters (1) mitteils einer Klemmeinrichtung (50) befestigt ist.

6. Gewächshaus nach Anspruch 1, dadurch gekennzeichnet, daß das mindestens eine Greifelement für die schwenkbare Verbindung mit einem Öffnungsmechanismus (27) an eine Glasplatte (5) eines Fensters (1) angeklebt ist.

7. Gewächshaus nach einem der vorhergehenden Ansprüche, dadurch gekennzeichnet, daß das Fenster (1) eine Glasplatte (5) aus gewöhnlichem Glas umfaßt, die vorzugsweise eine Dicke von 4 bis 5 mm aufweist.

8. Gewächshaus nach einem der vorhergehenden Ansprüche, dadurch gekennzeichnet, daß das Fenster (1) im wesentlichen aus einer Glasplatte (5) aus gewöhnlichem Glas mit einem Scharnierprofil (4) und einem Greifprofil (13) besteht, das sich im wesentlichen entlang der gesamten Länge der unteren und oberen Ränder der Glasplatte (5) erstreckt.

9. Verfahren zum Bau eines Gewächshauses wie in irgendeinem der vorhergehenden Ansprüchen angegeben, dadurch gekennzeichnet, daß eine Vielzahl von Glasplatten (5) für Fenster (1), die für die Lüftung zu öffnen sind, zur Baustelle ohne befestigtes Scharnierprofil und ohne befestigtes Greifelement transportiert werden und daß das Scharnierprofil und das Greifprofil auf der Baustelle mit der Glasplatte verbunden werden.

**Revendications**

1. Serre comprenant un composant de toiture (2) à profilé en forme de faîte, s'étendant longitudinalement depuis une partie de toiture de la serre, et au moins une fenêtre (1) reliée à pivotement audit composant de toiture à profilé en forme de faîte (2), pour passer d'une position fermée à une position ouverte pour permettre une ventilation, cette fenêtre (1) comprenant une plaque en verre (5) sans cadre sur au moins deux de ses côtés, dans laquelle au moins un organe de prise (13) d'un mécanisme d'ouverture de fenêtre (27) est fixé à cette plaque en verre (5), caractérisée en ce que ledit au moins un organe de prise (13) est fixé à ladite plaque en verre (5) de ladite fenêtre (1), sans qu'il n'y ait de moyen de fixation s'étendant à travers ladite plaque en verre (5).

2. Serre selon la revendication 1, caractérisée en ce qu'au moins un organe de prise (13) disposé sur le bord inférieur (8) de la plaque en verre (5) de ladite fenêtre (1) est couplé, par l'intermédiaire d'au moins un organe de traction tendu (17), à un profilé articulé (4) disposé sur le bord supérieur (7) de ladite plaque en verre (5).

3. Serre selon la revendication 1 ou 2, caractérisée en ce que le profilé articulé (4) est pourvu d'un bord de fixation (15) pour au moins un organe de traction (17).

4. Serre selon l'une quelconque des revendications précédentes, caractérisée en ce que la fenêtre (1) présente sur son bord inférieur (8) au moins une pièce profilée qui, en plus d'une pièce de prise en forme de U (11) étant en prise sur le bord inférieur (8) de la plaque en verre (5), comprend un tube triangulaire (19) situé à une courte distance intérieure de ladite pièce en forme en U (11), une bride (20), et une pièce de couplage (21) couplée à un mécanisme d'ouverture (27).

5. Serre selon la revendication 1, caractérisée en ce qu'au moins un organe de prise permettant une liaison pivotante d'un mécanisme d'ouverture (27) est fixé à une plaque en verre (5) d'une fenêtre (1) grâce à un moyen de serrage (50).

6. Serre selon la revendication 1, caractérisée en ce qu'au moins un organe de prise permettant une liaison pivotante d'un mécanisme d'ouverture (27) est collé à une plaque en verre (5) d'une fenêtre (1).

7. Serre selon l'une quelconque des revendications précédentes, caractérisée en ce que la fenêtre (1) comprend une plaque en verre (5) réalisée en verre classique, qui présente une épaisseur allant de préférence de 4 à 5 mm.

8. Serre selon l'une quelconque des revendications précédentes, caractérisée en ce que la fenêtre (1) comprend essentiellement une plaque en verre (5) réalisée en verre classique, dotée d'un profilé articulé (4) et d'un profilé de prise (13) s'étendant pratiquement sur toute la longueur des bords supérieur et inférieur de ladite plaque en verre (5).

9. Procédé de construction d'une serre selon l'une quelconque des revendications précédentes, caractérisé en ce qu'une pluralité de plaques en verre (5) destinées à des fenêtres (1) susceptibles d'être ouvertes pour permettre une ventilation est transportée au site de construction sans présenter de profilé articulé fixé, ni d'organe de prise fixé, et en ce que ledit profilé articulé et ledit profilé de prise sont reliés à la plaque en verre sur le site de construction.

FIG. 1

FIG. 3

FIG. 5

EP 0 378 868 B1

FIG. 2

FIG. 4

FIG.6

FIG.7

FIG. 8

FIG.10

FIG.9

EP 0 378 868 B1